Europäisches Patentamt

European Patent Office

Office européen des brevets

(19)

(11) Numéro de publication : **0 686 853 A1**

(12) # DEMANDE DE BREVET EUROPEEN

(21) Numéro de dépôt : **95401276.1**

(22) Date de dépôt : **01.06.95**

(51) Int. Cl.⁶ : **G01R 31/28**

(30) Priorité : **06.06.94 FR 9406888**

(43) Date de publication de la demande :
**13.12.95 Bulletin 95/50**

(84) Etats contractants désignés :
**AT BE CH DE DK ES FR GB IT LI NL SE**

(71) Demandeur : **ALCATEL MOBILE
COMMUNICATION FRANCE
10, rue de la Baume
F-75008 Paris (FR)**

(72) Inventeur : **Torregrossa Philippe
La Maillardière
F-53360 Origne (FR)**

(74) Mandataire : **Pothet, Jean Rémy Emile Ludovic
et al
c/o SOSPI
14-16 rue de la Baume
F-75008 Paris (FR)**

(54) **Procédé de réduction du temps de réglage d'une fonction électronique comprise dans un produit et présentant une dispersion d'un produit à un autre**

(57) L'invention concerne un procédé de réglage d'une fonction électronique d'un produit faisant partie d'une population de produits à régler, cette fonction électronique présentant une dispersion d'un produit à un autre. Le procédé consiste à remplacer un paramètre consigné dans un étage de correction de dispersion couplé à la fonction électronique par un paramètre de correction pour que la réponse de cette fonction et de l'étage de correction associé à un stimulus d'entrée prédéterminé soit comprise dans un intervalle prédéterminé.

Selon l'invention, ce paramètre est un paramètre centré correspondant à la valeur moyenne de la courbe de capabilité des paramètres de correction de la fonction, cette valeur moyenne étant remise à jour lorsque le pourcentage de la population de produits pour laquelle les mesures sont situées hors de l'intervalle prédéterminé devient supérieure à un pourcentage prédéterminé.

Une grande proportion des mesures effectuées est ainsi située dans l'intervalle prédéterminé et il n'est alors pas nécessaire de procéder à un réglage de cette fonction.

EP 0 686 853 A1

Jouve, 18, rue Saint-Denis, 75001 PARIS

Le domaine de l'invention est celui des procédés de réglage de fonctions comprises dans des produits, notamment électroniques, issus de chaînes de fabrication. Plus précisément, la présente invention concerne un procédé permettant un réglage rapide de produits finis à partir d'un minimum de mesures de leurs caractéristiques. L'invention s'applique notamment au réglage de radiotéléphones, tels que les terminaux de type GSM.

Lorsque des pièces sont fabriquées en série, elles ne sont, en bout de la chaîne de fabrication, jamais rigoureusement identiques entre elles. Les mesures effectuées mettent en évidence une certaine dispersion des caractéristiques d'une pièce à l'autre et on ne considérera comme répondant à un certain critère de qualité que les pièces qui présentent des caractéristiques situées à l'intérieur d'une fourchette prédéterminée. Tout processus de fabrication peut être défini par un coefficient de capabilité $C_p$ qui traduit l'aptitude de ce processus à produire des pièces dans les limites de tolérance que l'on s'est fixé.

Un lot de produits électroniques, par exemple des radiotéléphones, présente également des dispersions de caractéristiques de fonctionnement du fait des tolérances des composants employés et il est nécessaire d'effectuer des réglages de ces produits, tout du moins de ceux qui ne respectent pas les critères de qualité préétablis. Les réglages peuvent consister à modifier une fonction analogique, par exemple à régler un potentiomètre, ou numérique, par exemple à modifier une valeur dans une mémoire RAM.

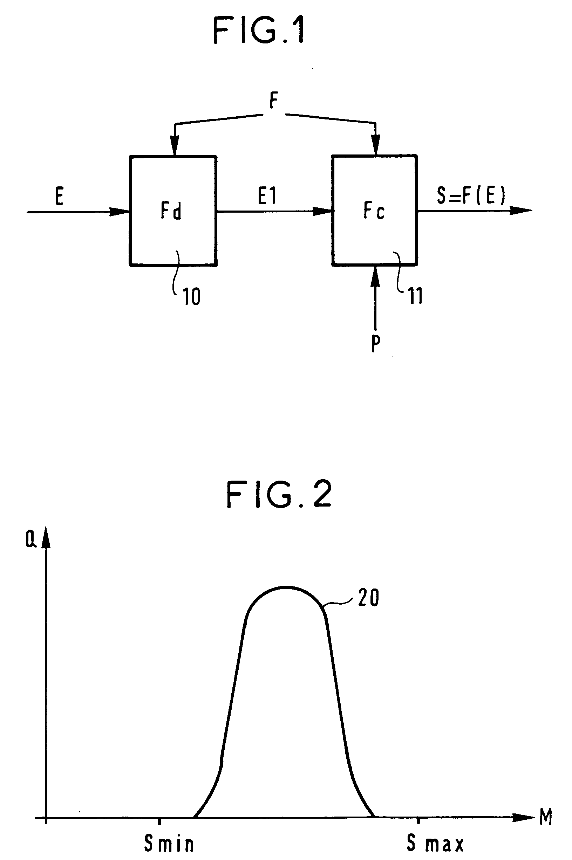

Dans la majorité des cas, un paramètre de correction corrige une dispersion amont ou environnante et plus rarement une dispersion se présentant en aval. La figure 1 représente une fonction électronique 10 qui est à régler à l'aide d'un étage de correction 11 qui la suit.

Pour permettre d'effectuer un réglage, un stimulus E est appliqué à l'entrée de la fonction 10 qui présente une dispersion représentée par la fonction Fd. La fonction 10, par exemple constituée par un oscillateur commandé en tension ou un filtre à régler, fournit une réponse E1 avec E1 = Fd(E). La réponse E1 est appliquée à l'étage de correction 11 qui présente une fonction de correction Fc. Plus précisément, Fc est une fonction représentant l'action de correction d'un paramètre P sur une fonction F à compenser. F représente la fonction globale FcoFd. La réponse de l'étage de correction 11 est notée S = Fc(P,E1) = F(E). Le réglage consiste à modifier le paramètre P pour compenser la fonction F. La mesure de la réponse S peut s'effectuer soit directement en sortie de l'étage de correction 11, soit après un étage n'introduisant pas de dispersion dans la fonction analysée (étage neutre) situé en aval de l'étage de correction 11.

La figure 2 est une courbe de capabilité 20 de mesures de fonctions ayant subi un réglage.

La courbe 20 est une gaussienne située dans un intervalle [Smin, Smax] où Smin et Smax constituent respectivement des valeurs de seuil minimales et maximales. L'axe des abscisses correspond à une mesure physique M de la fonction F et celui des ordonnées à une quantité Q de produits ayant été réglés. La courbe 20 n'est pas nécessairement centrée sur (Smin + Smax)/2.

Une forme sophistiquée de réglage consiste à utiliser des algorithmes de réglage qui mesurent les réponses d'un produit à différents stimuli et corrigent des valeurs numériques mémorisées dans ce produit pour que ces réponses correspondent à des optimums. La première mesure est effectuée pour un paramètre quelconque consigné dans l'étage de correction associé à la fonction. Comme la première mesure est rarement optimale, on modifie pas à pas le paramètre de correction pour chercher à obtenir une réponse optimale. Ce procédé de réglage est coûteux en temps et la présente invention a pour objectif de pallier cet inconvénient.

Plus précisément, un des objectifs de l'invention est de fournir un procédé permettant de régler rapidement une fonction électronique comprise dans une population de produits et présentant une dispersion d'un produit à un autre.

Cet objectif, ainsi que d'autres qui apparaîtront par la suite, est atteint grâce à un procédé de réglage d'une fonction électronique d'un produit faisant partie d'une population de produits à régler, cette fonction électronique présentant une dispersion d'un produit à un autre, le procédé consistant à remplacer un paramètre consigné dans un étage de correction de dispersion couplé à la fonction électronique par un paramètre de correction pour que la réponse de la fonction et de son étage de correction à un stimulus d'entrée prédéterminé soit comprise dans un intervalle prédéterminé, ce procédé étant caractérisé en ce que ce paramètre de consigne est un paramètre centré correspondant à la valeur moyenne de la courbe de capabilité des paramètres de correction de la fonction, cette valeur moyenne étant remise à jour lorsque le pourcentage de la population de produits pour laquelle les mesures sont situées hors de l'intervalle prédéterminé devient supérieure à un certain pourcentage.

Ainsi, le réglage d'une population de produits comprend une première étape essentielle consistant à consigner dans chaque étage de correction le paramètre centré de la fonction à corriger, et ce avant toute mesure. Un pourcentage important de fonctions électroniques fourniront alors des réponses situées dans l'intervalle prédéterminé et aucun réglage ne sera nécessaire.

Dans un mode de mise en oeuvre avantageux, le procédé de l'invention consiste également à :
- pour une partie de la population de produits, mémoriser et associer dans une table chaque mesure comprise hors de l'intervalle prédéterminé au paramètre de correction correspondant, ces mesures constituant des mesures de référence ;

- pour le reste de la population de produits, à chaque mesure effectuée comprise hors de l'intervalle prédéterminé, vérifier s'il existe dans cette table une mesure de référence sensiblement égale à la mesure effectuée à un epsilon près et, si oui, remplacer le paramètre centré par le paramètre associé à la mesure de référence correspondante.

Ces étapes reviennent donc à acquérir des mesures pour plusieurs produits et, si celles-ci sortent d'un intervalle prédéterminé, ces mesures sont mémorisées avec les paramètres correspondants qui corrigent les dispersions (afin que les mesures après corrections soient situées à l'intérieur de l'intervalle prédéterminé). On crée ainsi une table comportant, pour chaque mesure sortant de l'intervalle prédéterminé, appelée mesure de référence, un paramètre de correction correspondant. Ensuite, à chaque mesure effectuée comprise hors de l'intervalle prédéterminé, on choisit dans la table la mesure de référence la plus proche de la mesure effectuée (à un epsilon près) pour remplacer le paramètre centré par le paramètre associé à cette mesure de référence.

On considère donc que si une fonction électronique à régler associée à son étage de correction fournit une réponse située hors d'un certain intervalle, une réponse similaire d'un autre produit devra être corrigée de la même manière et il en résulte un gain de temps de réglage considérable.

Dans un mode de mise en oeuvre avantageux, le procédé de l'invention consiste à remplacer le paramètre centré par un paramètre de correction pour que la réponse de la fonction à un stimulus d'entrée prédéterminé qui lui est appliqué soit située au milieu de l'intervalle prédéterminé.

Cela revient à chercher un optimum de réponse, dans les limites fixées par la gamme de variation du paramètre de correction.

Lorsqu'un paramètre centré a été préalablement remplacé par le paramètre associé à la mesure de référence, on effectue préférentiellement une mesure confirmant que la réponse de la fonction électronique au stimulus prédéterminé est située dans l'intervalle prédéterminé.

D'autres caractéristiques et avantages de l'invention apparaîtront à la lecture de la description suivante d'un mode de mise en oeuvre avantageux, donné à titre illustratif et non limitatif, et des dessins annexés dans lesquels :

- la figure 1 représente une fonction électronique à régler à l'aide d'un étage de correction situé en aval de cette fonction ;
- la figure 2 est une courbe de capabilité de mesures de fonctions de produits ayant subi un réglage ;
- la figure 3 est une courbe de capabilité d'un paramètre de réglage ;
- la figure 4 représente la courbe de capabilité des mesures réalisées lorsque le paramètre centré est consigné dans chaque étage de correction ;
- la figure 5 représente les variations des réponses mesurées d'un échantillon de trois produits pour un paramètre de correction variant entre ses valeurs minimales et maximales ;
- la figure 6 représente une table où sont mémorisées les mesures situées hors de l'intervalle de tolérance et les paramètres de correction correspondants.

Les figures 1 et 2 ont été décrites précédemment en référence à l'état de la technique.

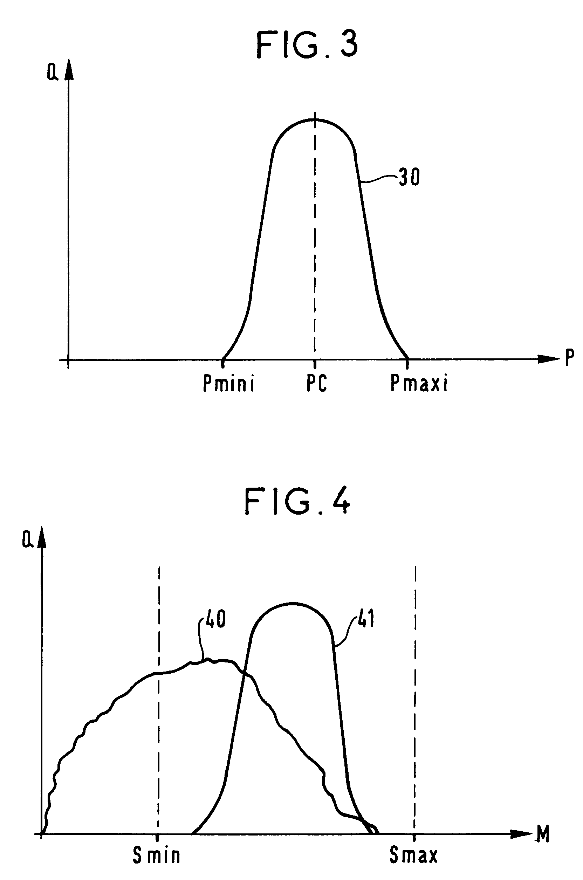

La figure 3 est une courbe de capabilité 30 d'un paramètre de réglage. La courbe 30 est une gaussienne représentant la quantité de produits réglés Q en fonction de la valeur du paramètre P. Le paramètre P peut prendre des valeurs comprises entre un paramètre minimal Pmini et un paramètre maximal Pmaxi. A titre d'exemple, si ce paramètre est une valeur numérique codée sur 4 bits, Pmini vaut 0000 et Pmaxi 1111. La courbe 30 présente une valeur moyenne PC, PC étant appelé un paramètre centré. On a :

$$PC = \frac{1}{N} \sum_{i=1}^{N} Pi$$

où N est le nombre de paramètres considérés.

Le réglage d'une fonction consiste dans un premier temps à consigner la valeur PC (P = PC) dans chaque produit avant réglage. En appliquant à la fonction à corriger un stimulus prédéterminé (fréquence, tension, rampe, ...), on mesure la réponse de cette fonction.

La figure 4 représente la courbe de capabilité de la mesure associée à la fonction électronique à régler, cet étage comprenant comme paramètre de correction la valeur moyenne PC de la courbe de capabilité optimale des paramètres de cette fonction.

La courbe de capabilité de la mesure obtenue et mesurée est référencée 40 et la courbe de capabilité optimale des mesures avec les bons paramètres de correction est référencée 41. On constate que si l'on utilise PC comme valeur de consigne pour chaque étage de correction, on obtient, du fait des dispersions des composants, des réponses situées hors de l'intervalle [Smin, Smax] mais un pourcentage important de produits fournit des réponses situées dans cet intervalle.

Comme ces réponses sont satisfaisantes, il n'est pas nécessaire de chercher à obtenir une réponse optimale et on limite ainsi le temps de réglage.

De plus l'invention propose, après avoir consigné la valeur moyenne de la courbe de capabilité de cette fonction dans chaque étage de correction, de mesurer les réponses d'une fraction de cette population de produits et de mémoriser et associer dans une table chaque mesure comprise hors d'un intervalle prédéterminé au paramètre de correction correspondant. Ces mesures situées hors de l'intervalle prédéterminé constituent des mesures de référence dont on va se servir pour régler les fonctions des autres produits et remettre à jour la valeur PC. Ainsi, à chaque mesure ultérieure comprise hors de cet intervalle prédéterminé, on consulte la table pour détecter la mesure de référence la plus proche (à une valeur epsilon près) de cette mesure ultérieure et on remplace le paramètre centré présent dans l'étage de correction de la fonction par le paramètre de correction associé à cette mesure de référence.

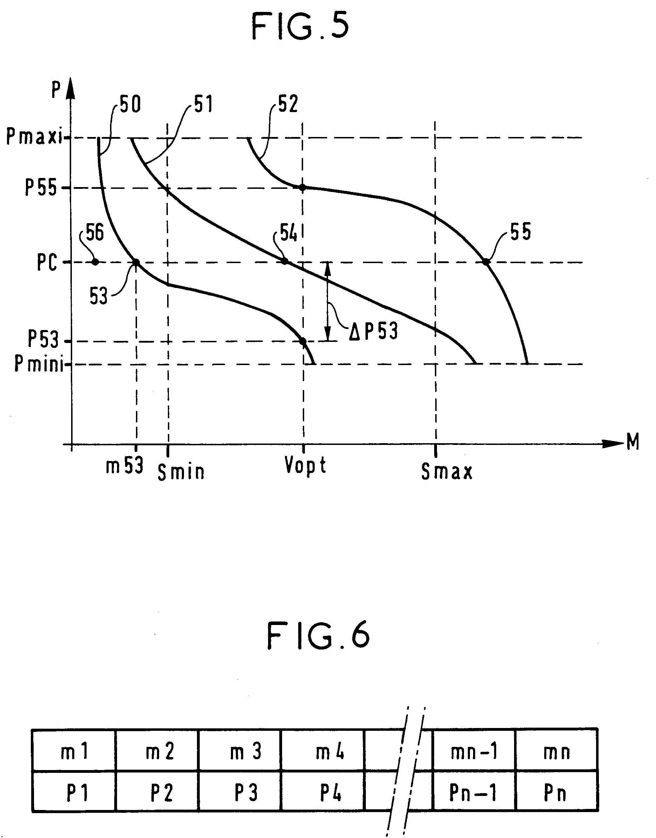

Ce principe sera mieux compris à la lecture de la description suivante de la figure 5 qui représente les variations des réponses mesurées d'un échantillon de trois produits pour un paramètre de correction variant entre ses valeurs minimales et maximales. Ces trois variations de réponses sont des courbes référencées 50 à 52. En fonction du paramètre P, chaque ensemble formé par une fonction électronique et un étage de correction couplé à cette fonction fournit une réponse située à l'intérieur ou -à l'extérieur de l'intervalle [Smin, Smax]. Chaque étage de correction étant consigné avec la valeur PC, les différents ensembles fournissent des premières mesures correspondant aux points 53 à 55. Les points 53 et 55 sont situés hors de l'intervalle [Smin, Smax] alors que le point 54 est situé dans cet intervalle. Deux approches sont alors possibles : on cherche des paramètres de correction P tels que les réponses des ensembles fonction + étage de correction soient situées à égale distance de Smin et Smax (à une valeur optimale Vopt) ou alors on se contente de paramètres de correction tels que les réponses soient dans l'intervalle [Smin, Smax]. Dans une approche de réglage optimal, pour la fonction fournissant la réponse 53, il faudra diminuer la valeur de PC d'une valeur $\Delta$P53 pour que le paramètre PC soit remplacé par un paramètre P53 alors qu'il faudra prévoir un paramètre de correction P55 pour l'étage de correction de la fonction fournissant la réponse 55.

L'invention propose de mémoriser les différentes mesures situées hors de l'intervalle [Smin, Smax] et des paramètres de correction correspondants. A titre d'exemple, pour une approche de réglage optimal, on mémorisera notamment la valeur m53 correspondant à la réponse précitée ainsi que le paramètre P53. On constitue ainsi une table où chaque mesure située hors de l'intervalle [Smin, Smax] est associée à la correction correspondante. Une telle table est représentée à la figure 6.

La table de la figure 6 comprend une pluralité de mesures m1 à mn associée chacune un paramètre de correction P1 à Pn. Les mesures m1 à mn sont appelées des mesures de référence. Considérons que la fonction électronique d'un autre appareil fournisse une réponse référencée 56 sur la figure 5 au même stimulus d'entrée. Dans ce cas, on cherchera dans la table associant chaque mesure de référence à un paramètre de correction laquelle de ces mesures de référence est la plus proche de la réponse 56. En supposant que cette mesure de référence est la mesure m53, on remplacera le paramètre compris dans l'étage de correction de la fonction considérée par P53 qui est le paramètre associé à la mesure de référence m53.

La table de la figure 6 peut être remplie au fur et à mesure du déroulement des mesures : si la mesure effectuée est située dans la table, à une valeur epsilon près, on affecte à la fonction de correction le paramètre de correction correspondant. Si la mesure effectuée n'est pas dans la table à cet epsilon près, on mémorise la mesure dans la table et on cherche le paramètre correspondant, par exemple avec un algorithme de réglage connu cherchant par exemple à obtenir une réponse optimale située au milieu des deux valeurs de seuil de tolérance.

Le procédé de réglage de l'invention repose sur un compromis entre le nombre d'échantillons servant à mettre à jour ou à construire la table de correspondance mesure de référence/paramètre et l'optimum de réglage obtenu, tout en tenant compte de la dispersion des fonctions électroniques. Plus le nombre de mesures de référence est élevé et la dispersion faible, plus le réglage sera optimal, c'est à dire que l'on aura pour chaque fonction électronique associée à un étage de correction une réponse proche de Vopt.

On veillera à mettre à jour régulièrement la valeur de PC, par exemple lorsque le pourcentage de la population de produits pour laquelle les mesures sont situées hors de l'intervalle prédéterminé devient supérieure à un pourcentage prédéterminé. On est ainsi assuré de tenir compte de la dérive des fonctions.

L'intervalle de tolérance pour lequel les mesures sont considérées comme correctes peut également être non fini, par exemple compris entre une valeur donnée et l'infini (moins l'infini), ou alors constitué par l'union de deux intervalles.

Après avoir remplacé le paramètre centré PC par le paramètre associé à la mesure de référence la plus proche, on effectue de préférence une mesure confirmant que la réponse de la fonction électronique et de l'étage de correction au stimulus prédéterminé est effectivement située dans l'intervalle prédéterminé.

Le procédé de l'invention s'applique également au réglage de plusieurs paramètres compris dans des fonctions de correction en série ou en parallèle. On opère de façon connue en minimisant l'incidence d'une fonction sur celle que l'on veut régler.

Une autre approche, valable dans le cas d'un réglage de paramètres en parallèle, consiste à mesurer la réponse des fonctions et de leurs étages de correction associés en sortie d'un étage neutre vis à vis de la dispersion à corriger. A titre d'exemple, si deux fonctions fonctionnent en parallèle et sont chacune suivies par un étage de correction couplé à un étage neutre de sortie de fonction Fn, on mesure m = Fn(m1, m2) où m1 et m2 sont les réponses des deux ensembles à corriger. On peut alors constituer un tableau associant m à (m1, m2). S'il existe plusieurs couplets (m1, m2) pour un m donné, la sélection se fera par la cohérence avec des tables m1/P1 et m2/P2.

Le procédé de l'invention peut être appliqué au réglage de fonctions électroniques comprises dans des radiotéléphones de type GSM. De manière générale, l'invention s'applique à la compensation de toute dispersion pouvant être corrigée dans un appareil électronique ou électrique.

## Revendications

1. Procédé de réglage d'une fonction électronique (10) d'un produit faisant partie d'une population de produits à régler, ladite fonction électronique (10) présentant une dispersion d'un produit à un autre, ledit procédé consistant à remplacer un paramètre consigné dans un étage de correction (11) de dispersion couplé à ladite fonction électronique (10) par un paramètre de correction pour que la réponse de ladite fonction (10) et dudit étage de correction (11) à un stimulus d'entrée prédéterminé qui leur est appliqué soit comprise dans un intervalle prédéterminé [Smin, Smax], caractérisé en ce que ledit paramètre est un paramètre centré (PC) correspondant à la valeur moyenne de la courbe de capabilité des paramètres de correction de ladite fonction (10), ladite valeur moyenne (PC) étant remise à jour lorsque le pourcentage de la population de produits pour laquelle lesdites mesures sont situées hors dudit intervalle prédéterminé [Smin, Smax] devient supérieure à un pourcentage prédéterminé.

2. Procédé selon la revendication 1, caractérisé en ce qu'il consiste de plus à :
   - pour une partie de ladite population de produits, mémoriser et associer dans une table chaque mesure (m1,..., mn) comprise hors dudit intervalle prédéterminé [Smin, Smax] au paramètre de correction correspondant (P1,..., Pn), lesdites mesures (m1,..., mn) constituant des mesures de référence ;
   - pour le reste de ladite population de produits, à chaque mesure effectuée comprise hors dudit intervalle prédéterminé [Smin, Smax], vérifier s'il existe dans ladite table une mesure de référence (m1,..., mn) sensiblement égale à ladite mesure à un epsilon près et, si oui, remplacer ledit paramètre centré (PC) par le paramètre (P1,..., Pn) associé à ladite mesure de référence (m1,..., mn) correspondante.

3. Procédé selon la revendication 1, caractérisé en ce qu'il consiste à remplacer ledit paramètre centré (PC) par un paramètre de correction pour que la réponse de ladite fonction (10) à un stimulus d'entrée prédéterminé qui lui est appliqué soit située au milieu dudit intervalle prédéterminé [Smin, Smax].

4. Procédé selon la revendication 2, caractérisé en ce qu'il consiste à effectuer une mesure confirmant que la réponse de ladite fonction électronique (10) audit stimulus prédéterminé est située dans ledit intervalle prédéterminé [Smin, Smax], lorsque ledit paramètre centré (PC) a été préalablement remplacé par ledit paramètre associé (P1,..., Pn) à ladite mesure de référence (m1,..., mn).

5. Procédé selon l'une des revendications 1 à 4, caractérisé en ce qu'il est appliqué au réglage de fonctions électroniques comprises dans des radiotéléphones de type GSM.

# FIG.1

# FIG.2

# FIG. 3

# FIG. 4

# FIG.5

# FIG.6

| m 1 | m 2 | m 3 | m 4 | | mn−1 | mn |
|-----|-----|-----|-----|--|------|-----|
| P 1 | P 2 | P 3 | P 4 | | Pn−1 | Pn |

**Office européen des brevets**

# RAPPORT DE RECHERCHE EUROPEENNE

Numero de la demande

EP 95 40 1276

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 420 506 (NOKIA MOBILE PHONES LTD)<br>* colonne 2, ligne 20 - colonne 3, ligne 57 *<br>--- | 1-5 | G01R31/28 |
| A | EP-A-0 376 666 (ASTEC INTERNATIONAL LTD.)<br>* page 2, ligne 26 - ligne 46 *<br>* revendication 1 *<br>--- | 1-5 | |
| A | EP-A-0 555 524 (I.B.M.)<br>* page 3, ligne 4 - page 4, ligne 43 *<br>* page 7, ligne 2 - ligne 26 *<br>* page 8, ligne 17 - ligne 30 *<br>* page 13, ligne 21 - ligne 26 *<br>----- | 1-5 | |

**DOMAINES TECHNIQUES RECHERCHES (Int.Cl.6)**

H04Q
G01R

Le présent rapport a été établi pour toutes les revendications

| Lieu de la recherche | Date d'achèvement de la recherche | Examinateur |
|---|---|---|
| LA HAYE | 12 Septembre 1995 | Gerling, J.C.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)